# FASCICULE DE BREVET EUROPEEN

(11) **EP 3 360 404 B1**
(45) Date de publication et mention de la délivrance du brevet: **04.05.2022**
(21) Numéro de dépôt: 17155288.8
(22) Date de dépôt: 08.02.2017
(51) Int. Cl.: A01D 34/58, A01D 34/84, A01D 34/86

(54) **ENGIN AGRICOLE OU DE TRAVAUX PUBLICS POUR LE FAUCHAGE/BROYAGE DE VÉGÉTAUX POURVU D'ORGANES MÉCANIQUES MOBILES DE TYPE ÉLECTRIQUE**
LAND- ODER STRASSENBAUMASCHINE ZUM AUSMÄHEN/ZERKLEINERN VON PFLANZEN, DIE MIT BEWEGLICHEN MECHANISCHEN ORGANEN VOM ELEKTRISCHEN TYP AUSGESTATTET IST
FARMING OR PUBLIC-WORKS MACHINE FOR REAPING/GRINDING PLANTS PROVIDED WITH ELECTRIC MOBILE MECHANICAL MEMBERS

(43) Date de publication de la demande: 15.08.2018
(73) Titulaire: Rousseau, 69250 Neuville-sur-Saone (FR)
(72) Inventeur: DAUDRE, Guillaume, 69370 SAINT DIDIER AU MONT D'OR (FR); COMTE, Jean-François, 69270 ROCHETAILLEE SUR SAONE (FR); COURTINE, Matthieu, 01260 VIEU (FR); UROS, Raymond, 70100 GRAY (FR); ZWEIG, François, 69270 ROCHETAILLEE SUR SAONE (FR)
(74) Mandataire: Cabinet Netter

(56) Documents cités:
- DE-A1-102009 033 706
- GB-A- 2 475 332
- US-A- 4 869 056
- US-A1- 2003 029 149

## Description

La présente invention se rapporte à un engin agricole ou de travaux publics automoteur de type épareuse pour le fauchage/broyage de végétaux.

Les engins agricoles pour nettoyer les bords des voies de communication ou les abords des champs et des forêts en fauchant les végétaux ou en taillant les arbres et les buissons comprennent de manière générale au moins un châssis monté sur roues ou chenilles, une cabine, une prise de force arrière et/ou avant et un équipement destiné à la tonte ou au broyage de végétaux.

Cet équipement est monté, selon le type de machine agricole ou l'utilisation, sur le côté du châssis, à l'avant ou à l'arrière, et comporte par exemple un bras pivotant articulé supportant un équipement de coupe/broyage tel qu'une tête de débroussaillage ou un lamier de coupe de branches. Habituellement, les organes mécaniques d'un tel équipement de coupe/broyage, par exemple les bras articulés ou les pivots, sont mis en action à l'aide de la puissance hydraulique.

Cependant, ce type de dispositif ne donne pas entièrement satisfaction. En effet, les moteurs hydrauliques utilisés sont polluants, difficiles à refroidir, et complexes à entretenir.

Ainsi, les pompes hydrauliques sont généralement entrainées en permanence lors de l'utilisation de la machine alors que seule une portion de l'énergie produite est réellement utilisée en temps réel.

Les circuits hydrauliques représentent une solution technique pour disposer de fortes puissances mécaniques, mais ils ont des rendements relativement faibles et présentent plusieurs inconvénients tels que des pertes mécaniques importantes sous forme calorifique, des risques de pollution environnementale lors de fuites, ou des risques de blessures par injection sous pression de fluide hydraulique sous la peau en cas de micro fuites ainsi que des risques de brûlure en cas de contact avec les fluides hydrauliques chauds.

En outre les flexibles hydrauliques nécessitent des rayons de courbure important compliquant leur mise en application et leur protection dans des environnements où les différents végétaux ou autres obstacles peuvent les endommager lors de l'utilisation de la machine.

Un équipement de fauchage/broyage de végétaux monté sur des organes mécaniques mobiles actionnés par un moteur électrique est connu des documents GB 2475332 A ou US 4,869,056.

Un but de la présente invention est donc de résoudre les problèmes cités précédemment à l'aide d'une solution simple à mettre en œuvre et à entretenir, très peu polluante, fiable, compacte, fournissant une puissance maximum utilisable instantanément et avec un excellent rendement.

Plus précisément, la présente invention a pour objet un engin agricole ou de travaux publics automoteur de type épareuse pour le fauchage/broyage de végétaux, par exemple pour l'entretien des voies de communication ou des abords de champs, comportant un châssis motorisé monté sur roues ou sur chenilles supportant au moins un équipement de fauchage/broyage de végétaux monté sur des organes mécaniques mobiles sous l'effet de l'action d'une source d'énergie, tels que des bras de levage et/ou des pivots de rotation, ladite source d'énergie amenée à ces organes mécaniques mobiles pour qu'ils fonctionnent étant électrique , caractérisé en ce que la source d'énergie électrique est implémentée directement sur l'équipement de fauchaqe/broyaqe ou sur un de ses organes mécaniques.

Cette solution permet par exemple, à l'aide d'actionneurs électriques, de mettre en mouvement le pivot latéral, avant ou arrière de la machine, permettant d'orienter le dispositif de broyage ou de coupe par rapport à l'axe longitudinal de la machine, les mouvements des différents éléments constituant le bras permettant alors de positionner dans toutes les directions le dispositif de broyage ou de coupe ainsi que la mise en mouvement des différents éléments de coupe et de broyage des outils installés sur le bras de positionnement tels que les rotors, les lames de coupes ou les autres éléments dont la fonction est le broyage ou la coupe de végétaux.

Selon des modes de réalisation préférés de la présente invention :
- la source d'énergie électrique est produite par réaction chimique, par exemple dans une batterie, par réaction physique, par exemple dans une pile à combustible, ou est issue d'une transformation magnétique, par exemple dans un générateur électrique ;
- la source d'énergie électrique est mise en œuvre par l'action du moteur dudit engin ;
- le (s) organe(s) mécanique(s) alimenté(s) par une source d'énergie électrique comporte(nt) au moins un actionneur de type faisant partie de la liste comprenant les moteurs électriques rotatifs pilotant des engrenages ou des poulies, les réducteurs ou les amplificateurs de couples, les crémaillères ou les vis sans fin intégrées ou non dans une architecture de type vérin électrique, les moteurs linéaires et les électroaimants ;
- l'actionneur électrique est muni d'au moins un module électrique et/ou électronique de contrôle pour gérer un mouvement, et/ou une position et/ou une vitesse de déplacement dudit organe mécanique ;
- le module de contrôle comporte en outre au moins un capteur de mouvement et/ou un capteur de position et/ou un capteur de vitesse et/ou une caméra; et
- le module de contrôle comporte en outre au moins un moyen de communication sans contact de l'engin à un réseau téléphonique ou satellite, en particulier pour déterminer la géolocalisation dudit engin.

L'invention va maintenant être décrite plus en détail en référence à des modes de réalisation particuliers donnés à titre d'illustration uniquement et représentés sur les figures annexées dans lesquelles
- La figure 1 est une vue en perspective d'un engin agricole de fauchage/broyage conforme à la présente invention ;
- La figure 2 est une vue de côté de la figure 1 ;
- La figure 3 est une vue arrière de la figure 1 ;
- La figure 4 est une vue de dessus de la figure 1 ;
- La figure 5 est une vue de détail d'une partie arrière d'un engin agricole ne faisant pas partie de la présente invention ; et
- La figure 6 est une variante de réalisation de la figure 1, ne faisant pas partie de la présente invention.

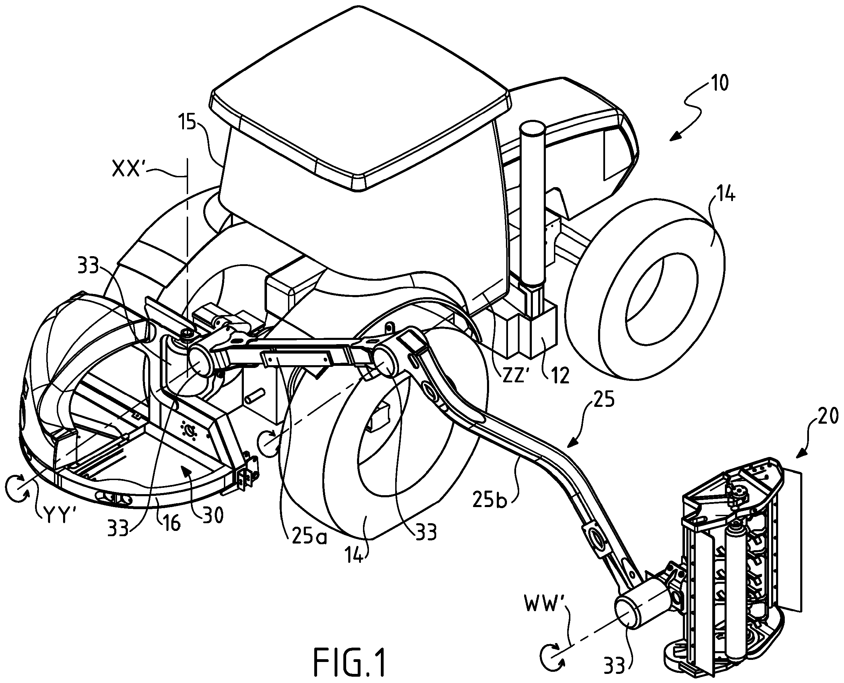

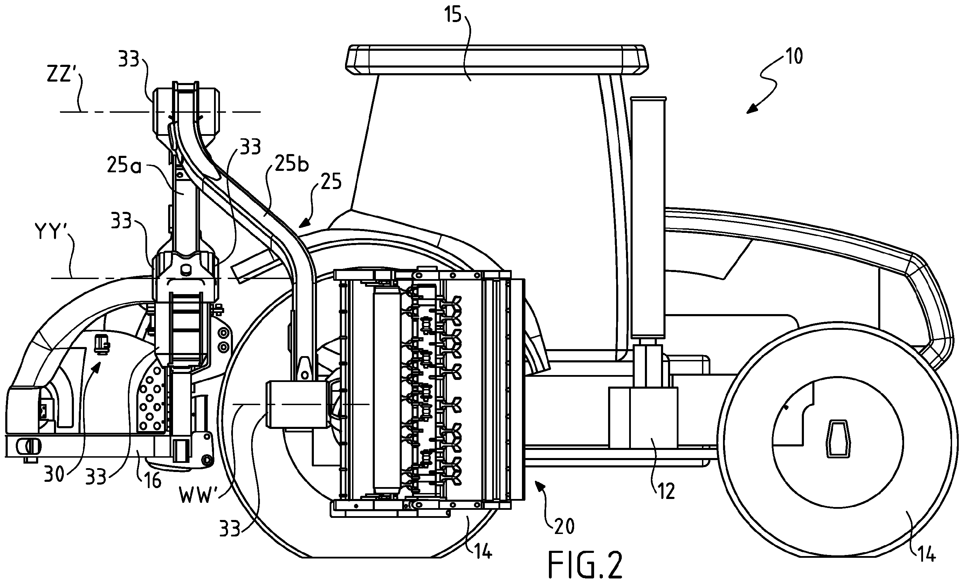

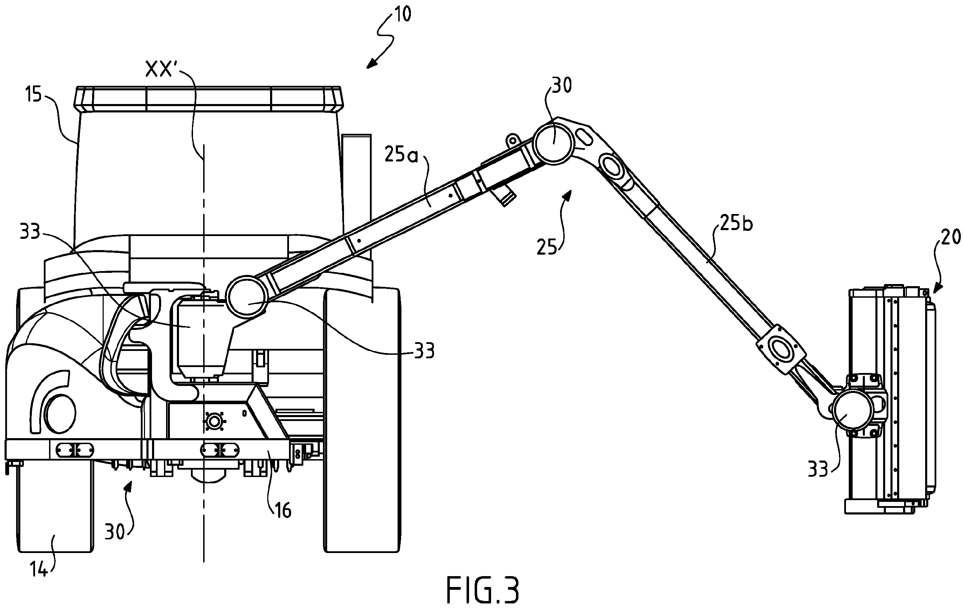

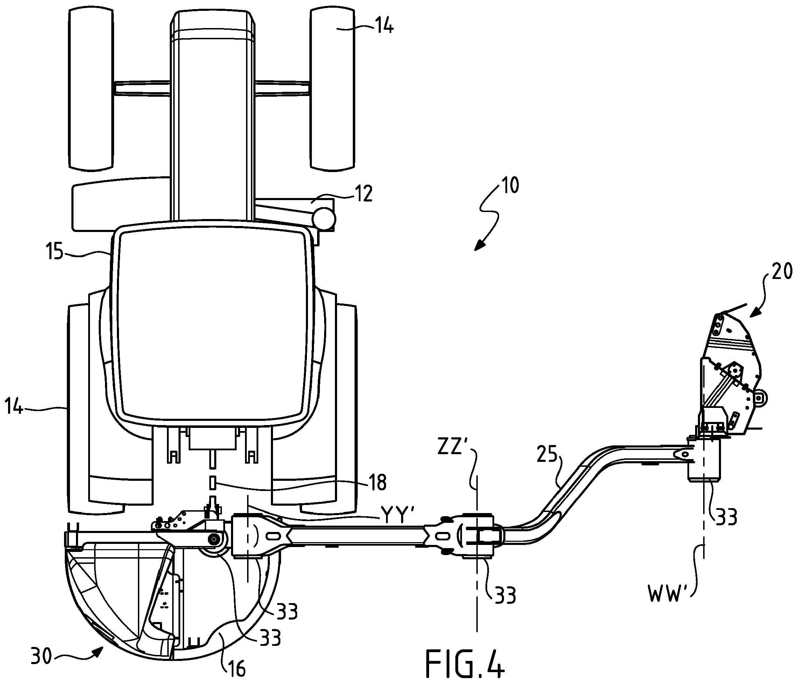

Les figures 1 à 4 représentent une machine agricole automotrice 10, telle qu'une épareuse, utilisée par exemple pour le fauchage/broyage de végétaux se trouvant aux abords des voies de communication ou sur les bords des champs. Cet engin comporte globalement un châssis 12, des roues 14, une cabine 15, un bâti arrière 16, une prise de force arrière rotative 18 et un groupe de coupe/broyage 20 monté sur un bras mobile/articulé 25 comportant deux parties principales 25a et 25b.

L'engin 10 comporte également un système 30 de commande et d'entraînement du groupe de coupe/broyage 20 connecté à la prise de force arrière 18 commune à la majorité des machines agricoles telles que les tracteurs. Cette prise de force 18 est habituellement mise en rotation par le moteur thermique du tracteur 10 et sert à l'entraînement de divers accessoires de type connus, en particulier des outils de fauchage.

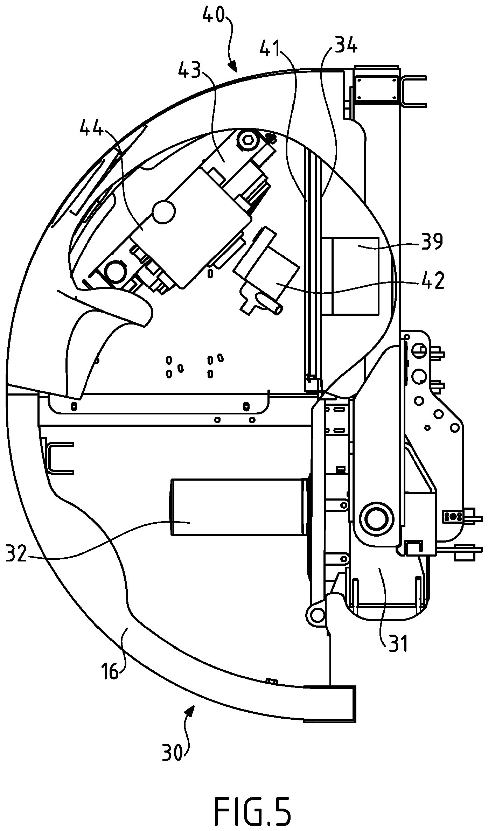

Dans le cas présent, comme cela est représenté plus en détail sur la figure 5, la prise de force 18 entraîne un multiplicateur 31 destiné à multiplier la vitesse de rotation d'entrée d'environ 500 à 1000 tr/min pour arriver à une vitesse de sortie d'environ 2500 à 5000 tr/min. Le multiplicateur 31 est relié en sortie à l'entrée d'une génératrice de courant 32 qui fournit une puissance électrique de sortie d'environ 15 à 50kW, par exemple entre 25 et 40kW. La génératrice électrique 32 est ensuite reliée à différents moteurs électrique 33 par l'intermédiaire de câblages et d'une armoire électrique 34 comprenant au moins un variateur. Une interface homme machine, typiquement disposée dans la cabine 15, permet à un opérateur de commander le dispositif de fauchage.

Ces moteurs électriques 33 permettent, de manière isolée ou en combinaison, le pivotement de différents éléments du bras articulé 25, par exemple une rotation de l'ensemble du bras (parties 25a et 25b) selon un axe vertical XX' pour avancer/reculer le groupe de broyage 20 le long du châssis de l'engin, une rotation de l'ensemble du bras selon un axe horizontal YY' pour relever ou abaisser le groupe de broyage 20, un pivotement de la partie d'extrémité 25b du bras 25 selon l'axe horizontal ZZ' pour éloigner/rapprocher latéralement le groupe de broyage 20 du châssis de l'engin (en combinaison avec le pivotement selon l'axe YY'), et une rotation du groupe de broyage 20 selon un axe horizontal WW' pour incliner ce dernier par rapport au sol.

Le bâti arrière 16 de la machine agricole 10 supporte également des moyens de refroidissement 40 d'un ou plusieurs des éléments parmi la génératrice de courant 32, les moteur électriques 33, le multiplicateur 31 et le variateur. En cas de besoin, les moyens de refroidissement 40 pourraient encore permettre de refroidir d'autres éléments.

Ces moyens de refroidissement 40, illustrés schématiquement sur la figure 5, comportent un échangeur thermique solide/eau glycolée 41, une pompe à eau glycolée 42, un refroidisseur 43, un vase d'expansion 44 contenant ladite eau glycolée et des conduites de liquide froid et chaud entrant/sortant des éléments à refroidir.

Le fonctionnement du dispositif 30 de commande et d'entraînement de l'équipement de coupe/broyage 20 est extrêmement simple et fiable puisque c'est la prise de force 18 qui engendre la production d'électricité par l'intermédiaire de la génératrice 32 afin d'alimenter les moteurs 33 en courant.

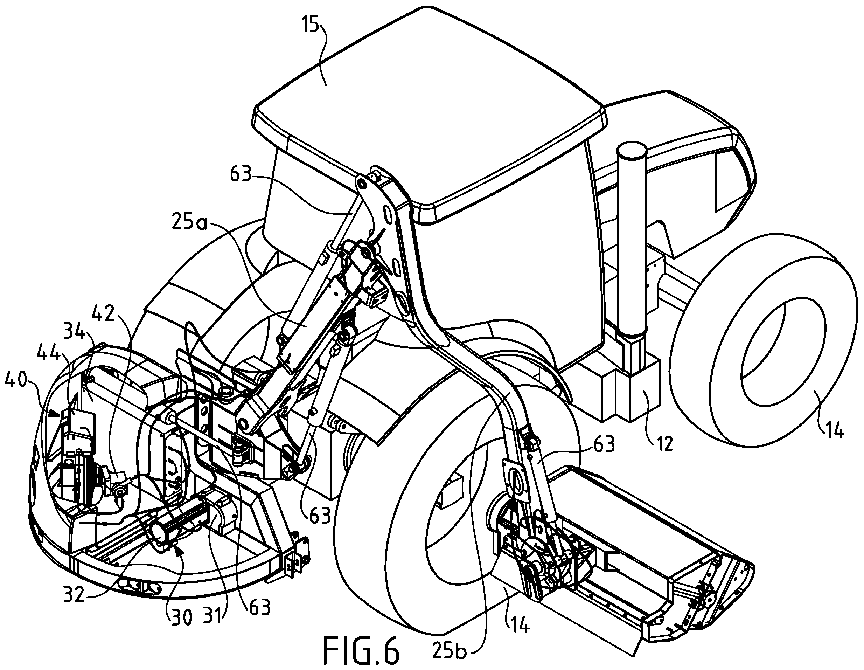

En variante de réalisation, les moteurs électriques 33 peuvent être remplacés par des vérins électriques 63 de type connu, comme illustré sur la figure 6, afin d'accomplir les mêmes mouvements de pivotement/rotation du bras 25 que ceux décrits précédemment.

L'énergie électrique peut être produite de différentes manières, soit par une réaction chimique ou physique tel que l'utilisation de batterie ou de piles à combustible, soit par une transformation magnétique telle que celle mise en œuvre dans les générateurs électriques mécaniques (comme représenté) ou les moteurs électriques.

La source de puissance électrique est implémentée soit directement sur un bras de levage, soit sur le groupe de coupe/broyage 20 lui-même. Dans le cas d'une utilisation urbaine ou ferroviaire la source électrique peut être directement constituée par le réseau électrique industriel ou domestique, en particulier celui d'une ligne de chemin de fer sur laquelle circule l'engin.

Selon l'architecture de l'engin, les actionneurs électriques mis en œuvre sont ainsi soit des moteurs électriques 33 pilotant des engrenages, des réducteurs ou des amplificateurs de couple, soit des crémaillères ou des vis sans fin intégrées ou non dans une architecture de type vérin électrique 63, soit des moteurs linéaires, soit des électroaimants permettant de réaliser des fonctions de limitation d'effort autorisant l'escamotage des éléments mécaniques en cas de surcharge comme par exemple en cas de collision avec un obstacle.

Les actionneurs électriques 33 ou 63 peuvent être pilotés par au moins un module électrique ou électronique de contrôle permettant notamment de gérer des automatismes allant du simple contrôle en position et en vitesse des différents organes jusqu'au des automatismes plus complexes gérant simultanément plusieurs mouvements afin de permettre des déplacements complexes permettant d'éviter des obstacles, des retours en position de travail ou des retours en position transport du dispositif de coupe ou de broyage.

Les modules de contrôle peuvent être en outre raccordés à des capteurs, notamment de mouvement et/ou de position et/ou de vitesse, afin d'assurer une perception de l'environnement de la machine et de prévenir l'opérateur via une interface homme-machine en cas de situation à risque de manière à automatiser tous les mouvements répétitifs. Ces capteurs peuvent être de type sans contact, tel qu'un radar, un capteur infra-rouge, un capteur laser, un GPS, une caméra à large spectres.

Les modules de contrôle peuvent être équipés de moyen de communication sans contact permettant la connexion de la machine via les réseaux téléphoniques ou satellites, par exemple de type GPS. Ces moyens de communication permettront de géo-localiser en temps réel la machine et d'accéder à l'ensemble de ses paramètres de fonctionnement afin de la piloter ou d'en assurer la maintenance.

La solution de la présente invention permet ainsi de réduire le poids et l'encombrement de la machine agricole 10 par rapport à l'art antérieur, en particulier de l'équipement de coupe/broyage 20 et des organes mécaniques le supportant. L'utilisation de moteurs électriques 33 ou de vérins électriques 63, accompagnés de la génératrice de courant 32, permet de réduire notablement le bruit et la pollution du système de commande et de l'équipement, tout en procurant un couple identique ou supérieur, disponible très rapidement. L'utilisation d'une technologie électrique permet de plus de créer une liaison flexible entre la prise de force 18 et l'équipement de coupe/broyage 20. Il est ainsi aisé de disposer une régulation et/ou un asservissement permettant de proposer un réglage aisé de la vitesse de rotation des outils de coupe indépendamment de la vitesse de rotation de la prise de force 18. Ceci offre une souplesse d'utilisation, une ergonomie améliorée, une grande fiabilité, un excellent rendement, en permettant des économies d'énergie. Enfin, cette solution s'intègre dans une démarche écologique d'avenir liée à la transition énergétique et permettant une préservation de l'environnement.

Il doit être bien entendu que la description détaillée de l'objet de l'invention, donnée uniquement à titre d'illustration, ne constitue en aucune manière une limitation, les équivalents techniques étant également compris dans le champ de la présente invention.

Ainsi, l'outil peut présenter d'autres formes selon l'utilisation souhaitée, avec une ou plusieurs partie(s) de coupe, arrêtes tranchante(s) et renfort(s) en carbure de tungstène.

## Revendications

1. Engin agricole ou de travaux publics automoteur (10) de type épareuse pour le fauchage/broyage de végétaux, par exemple pour l'entretien des voies de communication ou des abords de champs, comportant un châssis motorisé (12) monté sur roues (14) ou sur chenilles supportant au moins un équipement de fauchage/broyage de végétaux (20) monté sur des organes mécaniques mobiles sous l'effet de l'action d'une source d'énergie, tels que des bras de levage (25) et/ou des pivots de rotation, ladite source d'énergie amenée à ces organes mécaniques mobiles pour qu'ils fonctionnent étant électrique, **caractérisé en ce que** la source d'énergie électrique est implémentée directement sur l'équipement de fauchage/broyage (20) ou sur un de ses organes mécaniques.

2. Engin agricole ou de travaux publics (10) selon la revendication 1, **caractérisé en ce que** la source d'énergie électrique est produite par réaction chimique, par exemple dans une batterie.

3. Engin agricole ou de travaux publics (10) selon la revendication 1, **caractérisé en ce que** la source d'énergie électrique est produite par réaction physique, par exemple dans une pile à combustible.

4. Engin agricole ou de travaux publics (10) selon la revendication 1, **caractérisé en ce que** la source d'énergie électrique est issue d'une transformation magnétique, par exemple dans un générateur électrique.

5. Engin agricole ou de travaux publics (10) selon l'une quelconque des revendications précédentes, **caractérisé en ce que** la source d'énergie électrique est mise en œuvre par l'action du moteur dudit engin.

6. Engin agricole ou de travaux publics (10) selon l'une quelconque des revendications précédentes, **caractérisé en ce que** le (s) organe(s) mécanique(s) alimenté(s) par une source d'énergie électrique comporte (nt) au moins un actionneur (33, 63) de type faisant partie de la liste comprenant les moteurs électriques rotatifs pilotant des engrenages ou des poulies, les réducteurs ou les amplificateurs de couples, les crémaillères ou les vis sans fin intégrées ou non dans une architecture de type vérin électrique, les moteurs linéaires et les électroaimants.

7. Engin agricole ou de travaux publics (10) selon la revendication 6, **caractérisé en ce que** l'actionneur électrique (33, 63) est muni d'un module électrique ou d'un module électronique de contrôle pour gérer l'un(e) au moins parmi un mouvement, une position ou une vitesse de déplacement dudit organe mécanique.

8. Engin agricole ou de travaux publics (10) selon la revendication 7, **caractérisé en ce que** le module de contrôle comporte en outre l'un au moins d'un capteur de mouvement, d'un capteur de position, d'un capteur de vitesse et d'une caméra.

9. Engin agricole ou de travaux publics (10) selon la revendication 7 ou la revendication 8, **caractérisé en ce que** le module de contrôle comporte en outre au moins un moyen de communication sans contact de l'engin à un réseau téléphonique ou satellite pour déterminer la géolocalisation dudit engin.

## Patentansprüche

1. Selbstfahrende Land- oder Straßenbaumaschine (10) vom Typ eines Böschungsmähers zum Ausmähen/Zerkleinern von Pflanzen, zum Beispiel zur Instandhaltung der Verkehrswege oder der Feldränder, die ein auf Rädern (14) oder auf Raupenketten montiertes motorisiertes Fahrgestell (12) umfasst, das mindestens eine Ausrüstung zum Ausmähen/Zerkleinern von Pflanzen (20) trägt, die an mechanischen Gliedern, welche unter der Wirkung der Tätigkeit einer Energiequelle beweglich sind, wie etwa Hebearmen (25) und/oder Drehzapfen montiert ist, wobei die Quelle von Energie, die diesen beweglichen mechanischen Gliedern zugeführt wird, damit sie funktionieren, elektrisch ist, **dadurch gekennzeichnet, dass** die Quelle elektrischer Energie direkt an der Ausmäh-/Zerkleinerungsausrüstung (20) oder an einem ihrer mechanischen Glieder implementiert ist.

2. Land- oder Straßenbaumaschine (10) nach Anspruch 1, **dadurch gekennzeichnet, dass** die Quelle elektrischer Energie durch chemische Reaktion erzeugt wird, zum Beispiel in einer Batterie.

3. Land- oder Straßenbaumaschine (10) nach Anspruch 1, **dadurch gekennzeichnet, dass** die Quelle elektrischer Energie durch physikalische Reaktion erzeugt wird, zum Beispiel in einer Brennstoffzelle.

4. Land- oder Straßenbaumaschine (10) nach Anspruch 1, **dadurch gekennzeichnet, dass** die Quelle elektrischer Energie aus einer magnetischen Umwandlung, zum Beispiel in einem elektrischen Generator, stammt.

5. Land- oder Straßenbaumaschine (10) nach einem der vorstehenden Ansprüche, **dadurch gekennzeichnet, dass** die Quelle elektrischer Energie durch die Tätigkeit des Motors der Maschine eingesetzt wird.

6. Land- oder Straßenbaumaschine (10) nach einem der vorstehenden Ansprüche, **dadurch gekennzeichnet, dass** das mechanische Glied oder die mechanischen Glieder, die von einer Quelle elektrischer Energie versorgt werden, mindestens einen Aktor (33, 63) von dem Typ umfassen, der zu der Liste gehört, die elektrische Drehmotoren, die Zahnräder oder Riemenscheiben ansteuern, Drehmomentreduzierer oder -verstärker, Zahnstangen oder Schnecken, die in eine Architektur vom Typ eines elektrischen Zylinders integriert sind oder nicht, Linearmotoren und Elektromagnete umfasst.

7. Land- oder Straßenbaumaschine (10) nach Anspruch 6, **dadurch gekennzeichnet, dass** der elektrische Aktor (33, 63) mit einem elektrischen Modul oder mit einem elektronischen Steuermodul ausgestattet ist, um mindestens eines aus einer Bewegung, einer Position oder einer Verlagerungsgeschwindigkeit des mechanischen Gliedes zu steuern.

8. Land- oder Straßenbaumaschine (10) nach Anspruch 7, **dadurch gekennzeichnet, dass** das Steuermodul weiter mindestens eines aus einem Bewegungssensor, einem Positionssensor, einem Geschwindigkeitssensor und einer Kamera umfasst.

9. Land- oder Straßenbaumaschine (10) nach Anspruch 7 oder Anspruch 8, **dadurch gekennzeichnet, dass** das Steuermodul weiter mindestens ein Mittel zur kontaktlosen Kommunikation der Maschine mit einem Telefon- oder Satellitennetz umfasst, um den geografischen Standort der Maschine zu bestimmen.

## Claims

1. A self-propelling farming or public-works boom mower machine (10) for reaping/grinding plants, for example, for the maintenance of communication routes or edges of fields, including a motorised chassis (12) mounted on wheels (14) or on tracks supporting at least an equipment for reaping/grinding plants (20) mounted on mobile mechanical members as a result of the action of an energy source, such as lifting arms (25) and/or rotating pivots, said energy source supplied to these mobile mechanical members for them to work being electric, **characterised in that** the source of electrical energy is implemented directly on the reaping/grinding equipment (20) or on one of its mechanical members.

2. The farming or public-works machine (10) according to claim 1, **characterised in that** the electrical energy source is produced by chemical reaction, for example, in a battery.

3. The farming or public-works machine (10) according to claim 1, **characterised in that** the electrical energy source is produced by physical reaction, for example, in a fuel cell.

4. The farming or public-works machine (10) according to claim 1, **characterised in that** the electrical energy source originates from a magnetic transformation, for example, in an electric generator.

5. The farming or public-works machine (10) according to any of the previous claims, **characterised in that** the electrical energy source is operated by the action of the engine of said machine.

6. The farming or public-works machine (10) according to any of the previous claims, **characterised in that** the mechanical member(s) powered by an electrical energy source include(s) at least one actuator (33, 63) of the type forming part of the list comprising the rotating electric engines driving gears or pulleys, torque reducers or amplifiers, racks or augers integrated or not in an electric cylinder type architecture, linear engines and electromagnets.

7. The farming or public-works machine (10) according to claim 6, **characterised in that** the electrical actuator (33, 63) is provided with an electrical control module or an electronic control module to manage at least one among a movement, a position or a speed of movement of said mechanical member.

8. The farming or public-works machine (10) according to claim 7, **characterised in that** the control module also includes at least one of a motion sensor, a position sensor, a speed sensor and a camera.

9. The farming or public-works machine (10) according to claim 7 or claim 8, **characterised in that** the control module also includes at least a contactless means of communication from the machine to a telephone or satellite network to determine the geolocation of said machine.
